# EUROPÄISCHE PATENTSCHRIFT

(11) **EP 0 652 906 B1**
(45) Veröffentlichungstag und Bekanntmachung des Hinweises auf die Patenterteilung: **17.09.1997**
(21) Anmeldenummer: 93917654.1
(22) Anmeldetag: 26.07.1993
(51) Int. Cl.: C08G 63/91, C08G 69/48, C08G 69/44

(54) **VERFAHREN ZUR MODIFIZIERUNG VON POLYMEREN**
METHOD OF MODIFYING POLYMERS
PROCEDE PERMETTANT DE MODIFIER DES POLYMERES

(30) Priorität: 03.08.1992 DE 4225627
(43) Veröffentlichungstag der Anmeldung: 17.05.1995
(73) Patentinhaber: Henkel Kommanditgesellschaft auf Aktien, 40191 Düsseldorf (DE)
(72) Erfinder: BIRNBRICH, Paul, D-42719 Solingen (DE); EICKEN, Ulrich, D-41352 Korschenbroich (DE); FISCHER, Herbert, D-40299 Düsseldorf (DE); KLAMANN, Jörg-Dieter, D-27574 Bremerhaven (DE); SCHIEFERSTEIN, Ludwig, D-40822 Ratingen (DE)
(86) Internationale Anmeldenummer: EP9301986
(87) Internationale Veröffentlichungsnummer: WO9403523

(56) Entgegenhaltungen:
- EP-A- 0 416 488
- DE-A- 2 621 001
- PATENT ABSTRACTS OF JAPAN vol. 009, no. 052 (C-269)6. März 1985 & JP,A,59 192 715 (TORAY KK) 1. November 1984
- DATABASE WPI Week 8338, Derwent Publications Ltd., London, GB; AN 83-768281 & JP,A,58 136 622 (UNITIKA KK) 13. August 1983

## Beschreibung

Die vorliegende Erfindung betrifft ein Verfahren zur Modifizierung von Polymeren, die funktionelle Gruppen tragen, durch Umsetzung mit Delta²-Oxazolinen.

Es ist aus der Literatur bekannt, daß Delta²-Oxazoline mit verschiedensten chemischen Verbindungen unter Ringöffnung reagieren können. So entstehen beispielsweise aus in 2-Stellung substituierten Delta²-Oxazolinen mit Carbonsäuren Esteramide des Aminoethanols. Mit Phenolen bilden sich von Ethanolamiden abgeleitete Phenylether und mit Aminen bilden sich Aminoamide oder gegebenenfalls Amide. Zur näheren Erläuterung sei an dieser Stelle auf Übersichtsartikel verwiesen, beispielsweise J. A. Frump, Chem. Rev. 71, 483 - 505 (1971), insbesondere die Seiten 494 - 498 und H. Hellmann et al., Angew. Chem. 78, 913 - 27 (1966).

Die Reaktion von Oxazolinen mit Verbindungen, die Carboxyl-, Amino- und/ oder phenolische Hydroxylgruppen aufweisen, ist auch schon zur Modifizierung von Polymeren benutzt worden. So wird in US 4 351 936 die Umsetzung von durch Carboxylgruppen terminierten Polyestern mit Oxazolinen beschrieben, die in 2-Stellung mit Aminogruppen, Aminocarbonylgruppen oder Ethergruppen substituiert sind. Durch die Umsetzung wird die Zahl der freien Carboxylgruppen in den Polyestermolekülen verringert. In GB 1 426 409 wird die Umsetzung von Phenylenbisoxazolinen mit carboxylterminierten Polyestern beschrieben, die neben einer Verringerung der freien Carboxylgruppen auch zu einer Erhöhung des Molekulargewichts führt. Die Umsetzung von carboxylterminierten Polyestern mit kurzkettigen Alkyloxazolinen, wie sie in EP 416 288 beschrieben wird, führt ebenfalls zur Verringerung des Carboxylgruppengehaltes, aber auch zum Polymerabbau. Nachteilig an diesen Verfahren sind die geringe Reaktivität der Phenylenbisoxazoline und die Monofunktionalität der Alkylamino-, Alkylcarbamoyl- und Alkoxy-oxazoline, die einen gewünschten Molekulargewichtsaufbau des Polyesters bei der Verarbeitung verhindert.

Es wurde jetzt gefunden, daß sich bestimmte, vorzugsweise langkettig substituierte Delta²-Oxazoline und/oder Bis-delta²-oxazoline wesentlich besser zur Modifizierung von Polymeren mit reaktiven funktionellen Gruppen eignen.

Gegenstand der Erfindung ist ein Verfahren zur Modifizierung von Polymeren, die Carboxyl-, Amino- und/oder phenolische Hydroxylgruppen aufweisen, durch Umsetzung mit Delta²-Oxazolinen, dadurch gekennzeichnet, daß als Delta²-Oxazoline solche Mono- oder Bisoxazoline eingesetzt werden, die in 2-Stellung mit einem langkettigen, gegebenenfalls substituierten Alkyl- oder Alkenylrest mit 11 bis 23 C-Atomen in gerader Kette substituiert sind. Vorzugsweise wird das Verfahren zur Modifizierung von carboxylgruppenhaltigen Polyestern eingesetzt.

Das neue Verfahren zeichnet sich gegenüber den bekannten Verfahren durch eine wesentliche höhere Reaktivität der verwendeten Delta²-Oxazoline aus. Gleichzeitig wird beim Einbau der vorzugsweise verwendeten langkettigen Verbindungen in das Polymermolekül die Hydrolysestabiltät von Polykondensaten, wie Polyestern und Polyamiden, deutlich verbessert. Als weiterer Vorteil ist zu sehen, daß die verwendeten Delta²-Oxazoline nur geringe Flüchtigkeit aufweisen und deshalb ohne weitere Hilfsmaßnahmen bei den erforderlichen hohen Verarbeitungstemperaturen mit den Polymeren umgesetzt werden können. Die mit dem erfindungsgemäßen Verfahren modifizierten Polymeren weisen erniedrigte Schmelzviskositäten auf und zeigen in vielen Fällen geringere Haftung und besseres Gleitvermögen als die unmodifizierten Polymeren.

Das erfindungsgemäße Verfahren ist für Polymere verschiedensten Aufbaus geeignet, sofern sie Carboxyl-, Amino- und/oder phenolische Hydroxylgruppen aufweisen. Besonderes Interesse besitzt das Verfahren für Polymere, bei denen diese Substituenten als Endgruppen auftreten, insbesondere für Polyester und Polyamide aber auch für Polycarbonate. Beispiele für derartige Polymere sind insbesondere Polyethylenterephthalat, Polybutylenterephthalat, Polyamid 6, Polyamid 6,6, Polyamid 9, Polyamid 11 und Polyamid 12 sowie die aromatischen Polyamide, beispielsweise die aus aromatischen Diaminen und aromatischen Dicarbonsäuren aufgebauten Typen mit den Handelsbezeichnungen Kevlar^{(R)} und Nomex^{(R)}. Werden bei diesen Verbindungen reine Bisoxazoline oder Gemische aus Mono- und Bisoxazolinen zur Modifizierung eingesetzt, so tritt neben einer Modifizierung der Endgruppen eine Erhöhung des Molekulargewichts ein, die in vielen Fällen sehr erwünscht ist, da durch die Polykondensationsreaktion allein oft nur niedrige Molekulargewichte erreichbar sind oder aber die Polykondensate bei der Verarbeitung depolymerisiert sind. Von Interesse ist die Reaktion daher auch für das Recycling von Kunststoffabfällen, die aus verschiedenen Polykondensationsprodukten bestehen, wobei zusätzlich zur Erhöhung des Molekulargewichts auch miteinander unverträgliche Polymere durch die Verknüpfung kompatibilisiert werden und dadurch zu einem Polymerblend verarbeitet werden können.

Als Polymere sind aber auch Verbindungen einsetzbar, in denen Carboxylgruppen, Aminogruppen und/oder phenolische Hydroxylgruppen als laterale Substituenten auftreten. Als Beispiele seien Polymere und Copolymere von Acryl-, Methacryl- oder Maleinsäure genannt. Durch das erfindungsgemäße Verfahren können diese Polymeren vollständig oder partiell modifiziert werden, wobei sich Hydrophilie bzw. Hydrophobie des Polymeren je nach Menge und Art des verwendeten langkettigen Delta²-Oxazolins in weiten Grenzen einstellen lassen. Derartig modifizierte Polymere können beispielsweise als Öladditive, Kunststoffadditive oder Polymertenside Verwendung finden.

Bei den erfindungsgemäß verwendeten Delta²-Oxazolinen handelt es sich in erster Linie um Oxazoline, die in 2-Stellung durch den Alkylrest einer Fettsäure, die insgesamt 12 bis 24 C-Atome aufweist, substituiert sind. Derartige Oxazoline sind auf verschiedensten Wegen zugänglich, doch haben sich die in DE 38 24 982, DE 39 14 133 und DE 39 14 159 beschriebenen Verfahren, die von Carbonsäuren bzw. Carbonsäureestern ausgehen, als technisch besonders brauchbar erwiesen. Die Offenbarung dieser Patentanmeldungen wird daher in dieser Hinsicht mit zur Offenbarung der vorliegenden Anmeldung gezählt. Selbstverständlich können in Einzelfällen auch Oxazoline eingesetzt werden, die längere Alkylketten bis etwa C₄₀ aufweisen. Delta²-Oxazoline, deren Alkylrest sich von einer Hydroxycarbonsäure ableitet und demzufolge eine Hydroxylgruppe aufweist, lassen sich gemäß DE 39 15 874 mit Di- oder Polyisocyanaten zu Bis- oder Polyoxazolinen umsetzen, in denen die Oxazolinringe über Urethangruppen verknüpft sind. Derartige Bisoxazoline eignen sich ganz besonders für die Zwecke des erfindungsgemäßen Verfahrens. Ähnliche Bisoxazoline, die sich ebenfalls eignen, werden in der noch unveröffentlichten Patentanmeldung DE P 41 04 709.3 beschrieben. Weiterhin eignen sich für das erfindungsgemäße Verfahren die Bisoxazoline, die aus den obengenannten hydroxylgruppenhaltigen langkettigen Delta²-Oxazolinen durch Umesterung mit Dicarbonsäureestern erhältlich sind und die in der noch unveröffentlichten Patentanmeldung DE P 41 40 333.9 beschrieben werden. Die Offenbarung der vorgenannten Anmeldungen hinsichtlich der Bisoxazoline wird daher ebenfalls ausdrücklich mit zum Offenbarungsgehalt der vorliegenden Anmeldung gerechnet.

Besondere Vorteile ergeben sich bei der Modifizierung von Polymeren, insbesondere von Polyestern, mit monofunktionellen Delta²-Oxazolinen, die in 2-Stellung den Alkyl/Alkenylrest der Ricinolsäure, der Ölsäure oder des Sojafettsäuregemischs tragen. Bei Einsatz dieser Oxazoline können beispielsweise aus Polyethylenterephthalat völlig farblose und transparente Produkt erhalten werden.

Die Bedingungen unter denen das erfindungsgemäß Verfahren durchgeführt werden kann, können in sehr weiten Grenzen variiert werden. So ist es möglich, die Reaktanten in Lösung oder in Suspension in geeigneten Lösungs- bzw. Suspendiermitteln miteinander umzusetzen. Vorteilhafter ist aber meist die Möglichkeit, die Umsetzung ohne Lösungs- und Suspendiermittel in Substanz durchzuführen. Überlicherweise werden Reaktionstemperaturen über 100 °C angewandt, wobei gegebenenfalls die für die Reaktion zwischen Oxazolin und Carbonsäuren, Phenolen oder Aminen üblichen literaturbekannten Katalysatoren zur Beschleunigung zugesetzt werden können. Bei lösungsmittelfreiem Arbeiten werden vorzugsweise Reaktionstemperaturen zwischen etwa 150 °C und etwa 320 °C, insbesondere zwischen etwa 200 und etwa 280 °C angewandt. Unter diesen Umständen reichen häufig Reaktionszeiten von 2 bis 10 Minuten, vorzugsweise 3 bis 5 Minuten aus. Die Reaktionsbedingungen und damit auch die notwendigen Reaktionszeiten hängen selbstverständlich stark von der Reaktivität der Reaktanten ab und auch davon, welcher Umsetzungsgrad angestrebt wird. Für die Modifizierung von Endgruppen in den Polymeren werden üblicherweise 0,1 bis 5 Gewichtsteile an Oxazolin auf 100 Gewichtsteile des Polymeren eingesetzt, wobei dieses Verhältnis naturgemäß wesentlich von den Molekulargewichten der Reaktionspartner abhängt und in Einzelfällen auch unter oder über diesen Werten liegen kann. Für eine vollständige Umsetzung aller funktionellen Gruppen im Polymeren werden üblicherweise 1 bis 2,5 Mol, insbesondere 1,2 bis 2 Mol, an Oxazolingruppen pro Mol funktionaler Gruppe eingesetzt. Vorteilhaft wirkt sich in jedem Falle die hohe Reaktivität der langkettig substituierten Delta²-Oxazoline aus. Für die Durchführung der Reaktion in Lösung oder Suspension eignen sich übliche Rührapparaturen. Für die Umsetzung in Substanz werden Schneckenkneter und ähnliche Apparaturen, die sich für die Durchmischung zähfließender Schmelzen eignen, bevorzugt.

### Beispiele

### Beispiel 1 bis 10

In einem Doppelschneckenkneter DSK 42/7 (Brabender OHG, Duisburg), der mit einer Banddüse ausgerüstet war und einen Schneckenduchmesser von 41,8 mm und eine Schneckenlänge von siebenfachem Durchmesser (7D) aufwies, wurden bei einer in allen drei Heizzonen eingestellten Temperatur von 280 °C und einer Schneckendrehzahl von 25 U/min. 100 Teile carboxylterminiertes Polyethylenterephthalat (48 Äquivalente COOH/10⁶g) mit den in Tabelle 1 angegebenen Teilen Delta²-oxazolin umgesetzt. Die Ausgangsmaterialien wurden dabei als inniges Gemisch aus Polyestergranulat und flüssigem Oxazolin eingespeist. Die Verweilzeit im Extruder betrug etwa 6 Minuten. Wie aus Tabelle 1 ersichtlich, wurde der Carboxylgehalt des Polymers erheblich reduziert.

**Tabelle 1**

| Beispiel | Delta²-Oxazolin | Teile | COOH-Gehalt [eq/10⁶g] |
|---|---|---|---|
| 1 | 2-Heptadecenyloxazolin | 1,0 | 5 |
| 2 | 2-Undecyloxazolin | 0,7 | 7 |
| 3 | 2-Pentadecyloxazolin | 1,2 | 5 |
| 4 | 2-Heptadecenyloxazolin | 1,4 | 4 |
| 5* | 2-Phenyloxazolin | 1,0 | 13 |
| 6 | 2-Sojaalkyloxazolin | 2,0 | 6 |
| 7 | 2-(11-Hydroxyheptadec-8-enyl oxazolin (=Ricinoloxazolin) | 1,7 | 6 |
| 8 | Bisoxazolin aus Ricinoloxazolin und 4,4'-Diphenylmethandiisocyanat (gemäß DE 39 15 874) | 2,4 | 9 |
| 9 | Bisoxazolin aus Ricinoloxazolin und Tetramethyl-p-xyloldiisocyanat (gemäß DE 39 15 874) | 2,3 | 10 |
| 10 | kein Zusatz | 0,0 | 49 |

| | | | |
|---|---|---|---|
| * Vergleichsbeispiel | | | |

### Beispiele 11 bis 13

In einem gleichen Doppelschneckenkneter wie in Beispiel 1 wurden 100 Teile eines Polybutylenterephthalats ([ ]³⁵ °C = 0,7 dl/g; 64 Äquivalente o-ClC₆H₄OH COOH pro 10⁶g) mit den in Tabelle 2 angegebenen Teilen Bis[2-(12-Hydroxyheptadec-9-enyl)-oxazolin]-terephthalat (gemäß DE P 41 40 333.9) umgesetzt. Die Temperatur in allen drei Heizzonen des Kneters betrug 250 °C und die Schneckendrehzahl lag bei 30 U/min. Wie aus Tabelle 2 ersichtlich, wurde sowohl das Molekulargewicht (intrinsische Viskosität ) erhöht, als auch der Anteil an Carboxylfunktionen erniedrigt.

**Tabelle 2**

| Beispiel | Teile Bioxazolin | COOH-Gehalt [eq./10⁶g] | [ ]^{35°} o-ClC₆H₄OH [dl/g] |
|---|---|---|---|
| 11 | 0,5 | 26 | 1,4 |
| 12 | 1,0 | 34 | 1,0 |
| 13 | 0,0 | 68 | 0,67 |

## Patentansprüche

1. Verfahren zur Modifizierung von Polymeren, die Carboxyl-, Amino- und/oder phenolische Hydroxylgruppen aufweisen, durch Umsetzung mit Delta²-Oxazolinen, dadurch gekennzeichnet, daß als Delta²-Oxazoline Mono- oder Bisoxazoline eingesetzt werden, die in 2-Stellung mit einem langkettigen, gegebenenfalls substituierten Alkyl- oder Alkenylrest mit 11 bis 23 C-Atomen in gerader Kette substituiert sind.

2. Verfahren nach Anspruch 1, bei dem als Polymere Kunststoffabfälle und als Delta²-Oxazoline Bisoxazoline eingesetzt werden.

3. Verfahren nach einem der Ansprüche 1 oder 2, bei dem als Polymere Polyester, vorzugsweise Polyethylenterephthalat und/oder Polybutylenterephthalat eingesetzt werden.

4. Verfahren nach einem der Ansprüche 1 oder 2, bei dem als Polymere Polyamide, vorzugsweise Polyamid 6 oder Polyamid 6,6, eingesetzt werden.

5. Verfahren nach einem der Ansprüche 1 oder 2, bei dem als Polymere aromatische Polyamide, vorzugsweise Polyamide, die aus aromatischen Diaminen und aromatischen Dicarbonsäuren zugänglich sind, eingesetzt werden.

6. Verfahren nach Anspruch 3, bei dem als Delta²-Oxazoline Monooxazoline eingesetzt werden, die in 2-Stellung den Alkyl-/Alkenylrest der Ricinolsäure, der Ölsäure oder des Sojafettsäuregemischs tragen.

## Claims

1. A process for modifying polymers containing carboxyl, amino and/or phenolic hydroxyl groups by reaction with delta²-oxazolines, characterized in that mono- or bis-oxazolines substituted in the 2-position by a long-chain, optionally substituted alkyl or alkenyl radical containing 11 to 23 carbon atoms in a linear chain are used as the delta²-oxazolines.

2. A process as claimed in claim 1, in which waste plastics are used as the polymers and bis-oxazolines are used as the delta²-oxazolines.

3. A process as claimed in claim 1 or 2, in which polyesters, preferably polyethylene terephthalate and/or polybutylene terephthalate, are used as the polymers.

4. A process as claimed in claim 1 or 2, in which polyamides, preferably polyamide 6 or polyamide 6,6, are used as the polymers.

5. A process as claimed in claim 1 or 2, in which aromatic polyamides, preferably polyamides obtainable from aromatic diamines and aromatic dicarboxylic acids, are used as the polymers.

6. A process as claimed in claim 3, in which mono-oxazolines bearing the alkyl/alkenyl group of ricinoleic acid, oleic acid or the soybean oil fatty acid mixture in the 2-position are used as the delta²-oxazolines.

## Revendications

1. Procédé de modification de polymères présentant des groupes carboxyle, amino et/ou hydroxyle phénoliques, par mise en réaction avec des delta²-oxazolines, qui est caractérisé en ce que l'on utilise comme delta²-oxazolines des mono- ou des bisoxazolines, qui sont substituées en position 2 par un radical alkyle ou alcényle à chaîne longue, éventuellement substitué, comportant 11 à 23 atomes de C dans la chaîne linéaire.

2. Procédé selon la revendication 1, dans lequel on utilise comme polymères, des déchets de matières plastiques et comme delta²-oxazolines, des bisoxazolines.

3. Procédé selon une des revendications 1 ou 2, dans lequel on utilise comme polymères, des polyesters, de préférence du polyéthylènetéréphtalate et/ou du polybutylènetéréphtalate.

4. Procédé selon une des revendications 1 ou 2, dans lequel on utilise comme polymères, des polyamides, de préférence du polyamide 6 ou du polyamide 6,6.

5. Procédé selon une des revendications 1 ou 2, dans lequel on utilise comme polymères, des polyamides aromatiques, de préférence des polyamides, qui sont obtenables à partir de diamines aromatiques et d'acides dicarboxyliques aromatiques.

6. Procédé selon la revendication 3, dans lequel on utilise comme delta²-oxazolines, des mono-oxazolines, qui portent en position 2 le radical alkyle/alcényle de l'acide ricinolique, de l'acide oléique ou du mélange de l'acide gras de soja.
